# EUROPEAN PATENT SPECIFICATION

(11) **EP 3 014 094 B1**
(45) Date of publication and mention of the grant of the patent: **30.01.2019**
(21) Application number: 14817197.8
(22) Date of filing: 20.06.2014
(51) Int. Cl.: F02D 41/38, F02D 19/10, F02M 21/02, F02M 25/00, F02M 43/02, F02M 43/04

(54) **MODULE FOR CONTROLLING FUEL PRESSURE IN AN INTERNAL COMBUSTION ENGINE**
MODUL ZUR REGELUNG EINES KRAFTSTOFFDRUCKS IN EINER BRENNKRAFTMASCHINE
MODULE PERMETTANT DE CONTRÔLER LA PRESSION DU CARBURANT DANS UN MOTEUR À COMBUSTION INTERNE

(30) Priority: 28.06.2013 CA 2820013
(43) Date of publication of application: 04.05.2016
(73) Proprietor: Westport Power Inc., Vancouver, BC V6P 6G2 (CA)
(72) Inventor: MARK, Randall, T., Nanoose Bay, British Columbia V9P 9C1 (CA); WALKER, James, D., Malvern, Worcestershire WR14 3BH (GB)
(74) Representative: FRKelly
(86) International application number: PCT/CA2014/050583
(87) International publication number: WO 2014/205566

(56) References cited:
- EP-A2- 2 508 742
- WO-A1-2009/062228
- WO-A1-2011/094704
- CA-A1- 2 809 539
- US-A- 4 597 364
- US-B2- 6 484 699
- US-B2- 7 627 416
- US-B2- 8 459 576

## Description

### Technical Field

The present invention relates to a module for controlling fuel pressure in an internal combustion engine, more specifically to a module for controlling the pressure of one fuel with a pressure bias relative to the pressure of a second fuel.

### Background of the Invention

Presently, most over-the-road heavy vehicles are fuelled by gasoline or diesel fuel. There are certain shortcomings to using such fuels. They are in limited supply, and most importantly, they have an adverse impact on the environment due to the amount of pollutant gases released into the atmosphere when such fuels are combusted.

More recently, internal combustion engines are being developed that can operate efficiently with reduced levels of pollutants in the engine exhaust if fuelled with cleaner burning fuels such as natural gas, or other combustible gaseous fuels, such as, by way of example, methane, propane, butane, hydrogen, and blends of such fuels. In a preferred method, it is possible to substantially match the performance and efficiency of diesel or gasoline engines by delivering high-pressure gaseous fuel to an engine for injection directly into the combustion chamber.

A challenge with substituting gaseous fuels such as natural gas for liquid fuel in an engine designed to be fuelled with liquid fuels is that without some form of ignition assist, much higher temperatures and pressures are normally needed to auto-ignite gaseous fuels. Therefore, in order to burn a gaseous fuel in a conventional engine with the same compression ratio without having to completely redesign the engine, some mechanism is required to assist with ignition of the gaseous fuel, such as a hot surface provided by a glow plug, or a fuel injection valve for introducing a pilot fuel, such as diesel fuel. If the amount of pilot fuel is small, the amount of pollutants that the engine produces can be significantly reduced.

A problem with delivering two different fuels for injection into the combustion chambers of an internal combustion engine is that it can be difficult to find the physical space for all the components of the system, more specifically for the two fuel injection valves for each cylinder, for the two high pressure fuel rails, and the drain rails for taking away fuel that is drained from the control chambers of hydraulically actuated fuel injection valves and for all the other components involved in controlling the injection of the two fuels.

A solution to the problem of requiring two fuel injection valves is to combine the gaseous fuel injection valve and the pilot fuel injection valve in a single body, for example, as described in the applicant's disclosure in United States Patent number 6,073,862. A challenge with this approach is keeping the gaseous fuel from leaking into the pilot fuel. Such leakage can be prevented by controlling gaseous fuel pressure to maintain a predetermined pressure bias with the pilot fuel pressure by using a pressure regulator which uses the pilot fuel pressure as a reference pressure. Alternatively, the engine can be calibrated based on the required gaseous fuel pressure and the pilot fuel pressure is then controlled to be higher than the gaseous fuel pressure. In both alternatives, the pressure regulator is designed to maintain a pressure bias between the two fuels to prevent leakage of a first fuel into the second fuel. The gaseous fuel supply system also comprises other components, for example, valves for preventing the backflow of fuel to the tank, for venting the pressure in the fuel supply line and for shutting down the fuel supply when needed.

Mounting such additional controls on the engine represents a challenge when a conventional gasoline or diesel engine system is redesigned to operate with two fuels because of the limited free space available on the engine block or on the cylinder head.

In the past, this problem has been addressed by installing the additional components required for operating the engine with two fuels, in the space available, separate from each and fluidly connecting these components through piping. While this solution meets the functional requirements for operating the engine, such mounting can become complex in some engine systems. In addition, such piping adds to the total volume of the high pressure fuel supply system and a system with a lower overall volume can be operated more efficiently, and results in less high pressure gaseous that needs to be relieved when the system is shut down. Yet another disadvantage associated with extra piping is that each pipe connection introduces more potential leak points.

While the solutions from the prior art as described above solve the problem of adapting a conventional diesel or gasoline engine to be fueled with a pilot ignited gaseous fuel, there is still a need for a simpler and compact solution for installing additional components needed to control the pressure of a first fuel relative to a second fuel.

US Patent 4597364 A is directed to an engine system which can be separately fueled by a liquid fuel and a gaseous fuel; the system having individual components for each fuel system including lock off devices in each fuel supply line which together with a switching mechanism allow switching from one fuel to the other.

CA 2 809 539 A1 describes two separated common rails, wherein two fuels are injected directly into a cylinder. A first rail pressure of gaseous fuel is controlled based on a pressure of a liquid fuel.

### Summary

The present disclosure provides a module as detailed in claim 1, an assembly according to claim 5, and methods according to claims 13 and 14. Advantageous features are provided in dependent claims.

A module is disclosed for controlling a first fuel rail pressure in an internal combustion engine and maintaining a predetermined pressure bias with a second rail fuel pressure, both fuels being directly injected into the engine combustion chamber. The module comprises a manifold body having an inlet into the manifold body for receiving the first fuel into internal fuel passages defined by the manifold body, and an outlet from the manifold body for delivering the first fuel to a first fuel rail. The module comprises a pressure regulator for controlling the rail pressure of the first fuel as a function of said second fuel rail pressure which is used as a reference pressure for maintaining said pressure bias. The pressure regulator comprises a first inlet for receiving the first fuel which is fluidly connected through a first passage provided in the manifold body to the inlet of the manifold body, a second inlet for receiving the second fuel and an outlet for delivering the first fuel with a predetermined pressure bias, wherein the outlet of the pressure regulator is fluidly connected to the outlet of said manifold body through a second passage provided in the manifold body. The module further comprises a check valve having an inlet fluidly connected through the first passage in the manifold body to the inlet of said manifold body and to the pressure regulator and a shut-off valve for shutting down fluid flow to the first fuel rail. The shut-off valve has an inlet fluidly connected through the first passage in the manifold body to the inlet of said manifold body.

The pressure regulator, the check valve and the shut-off valve are installed on the manifold body to form a unitary and independent structure. This means that these components are installed to form a compact assembly which allows the fluid communication between the components through the internal passages in the manifold body of the module while allowing the flexibility of moving these components together as one structural unit which can be mounted at different locations on the engine.

The module for controlling first fuel rail pressure further comprises a vent outlet for venting first fuel from the module, the vent outlet being fluidly connected to the pressure regulator through a third passage provided in the manifold body.

The module can further comprise a service valve for venting fuel from the module during engine servicing which is installed on the manifold body and is fluidly connected through the third passage in the manifold body to the vent outlet.

In preferred embodiments, the manifold body of the module for controlling first fuel rail pressure is installed on a manifold body of a second fuel control module for controlling the second fuel rail pressure. The manifold body of the second fuel control module comprises a second fuel drain inlet, a second fuel drain outlet, a port for fluidly connecting second fuel control module to the module for controlling first fuel rail pressure and a port for fluidly connecting the manifold body of the second fuel control module to the first fuel rail.

The second fuel control module can comprise a second fuel pressure relief valve which is mounted on the manifold body of the second fuel control module. The second fuel pressure relief valve is connected through passages in the manifold body of the second fuel control module to the second fuel drain inlet and to the second fuel drain outlet.

The second fuel control module can further comprise at least one of a second fuel return valve, a second fuel return pressure sensor, a second fuel rail pressure sensor and a second fuel drain check valve which can be mounted on the manifold body of the second fuel control module and are connected through passages in the manifold body of the second fuel control module to the second fuel drain inlet and to second fuel drain outlet.

The manifold body of the second fuel control module can have at least one prolonged end which is shaped to accommodate the mounting of a system component, for example a filter for the second fuel.

The assembly formed by the module for controlling the first fuel rail pressure and the second fuel control module can be mounted on the engine block, on the cylinder head of the engine or on the frame of a vehicle powered by the engine.

In some embodiments, the manifold body of the module for controlling the first fuel rail pressure is mounted on a cylinder head of the engine, on the engine block or on the frame of the vehicle powered by the engine and is fluidly connected through piping to the second fuel control module that is mounted on the cylinder head, on the engine block or on the vehicle frame at a separate location from the location of the module for controlling the first fuel rail pressure.

A method is disclosed for installing a module for controlling a first fuel rail pressure on board of an internal combustion engine fuelled with a first fuel and a second fuel which are directly injected into a combustion chamber of the engine. The module being installed comprises a manifold body, a regulator for controlling the rail pressure of the first fuel to maintain a predetermined pressure bias with a second fuel rail pressure, a shut-off valve and check valve. The method comprises placing the manifold body of the module for controlling the first fuel rail pressure on the manifold body of a second fuel control module and mounting it thereto, and fluidly connecting the manifold body of the module for controlling the first fuel rail pressure to a first fuel supply and a first fuel rail. The second fuel control module can be mounted for example on the engine block, on the cylinder head of the engine or on the frame of a vehicle powered by the engine.

In another embodiment of the present method of installing a module for controlling a first fuel rail pressure on board of an internal combustion engine fuelled with a first fuel and a second fuel which are both directly injected into a combustion chamber of the engine, comprises placing the manifold body of the module for controlling the first fuel rail pressure on the engine block, on the cylinder head of the engine or on the frame of the vehicle powered by the engine, mounting it thereto and fluidly connecting the manifold body of this module to a first fuel supply, to a first fuel rail and to the components of a second fuel control module which is mounted on the engine block, on the cylinder head of the engine or on the vehicle frame at a different location from the location of the module for controlling the first fuel rail pressure.

### Brief Description of the Drawings

The drawings illustrate specific preferred embodiments of the invention.
Figure 1 is a schematic hydraulic diagram of a fuel supply system for a six cylinder engine fuelled with two different fuels and employing a module for controlling the pressure of a first fuel rail pressure and a second fuel control module;
Figures 2A illustrates a schematic hydraulic diagram of the module which controls the pressure of the first fuel;
Figures 3 illustrates a perspective semi-exploded view of the assembly comprising the module for controlling the pressure of the first fuel and the second fuel control module;
Figures 4 is a perspective view of the module for controlling the first fuel rail pressure assembled together with the second fuel control module;
Figures 5 illustrates the front view of the module for controlling the first fuel rail pressure showing the internal passages in its manifold body that allow the fluid connection between the different module components;
Figure 6 illustrates the front view, the left and right side views and the top view of the second fuel control module showing the internal passages in the manifold body that allow the fluid connection between the different module components; and
Figures 7A and 7B illustrate two variants for placing the module for controlling the first fuel rail pressure and the second fuel module on the engine block and, respectively, on the cylinder head of an internal combustion engine.

### Detailed Description of the Preferred Embodiments

The module for controlling a first fuel rail pressure illustrated in the preferred embodiments can be used in any internal combustion engine fuelled with two fuels, where both fuels are injected directly into the combustion chamber of the engine and where the pressure of the first fuel is controlled as a function of the pressure of the second fuel which is used as a reference for maintaining a bias between the pressures of the two fuels.

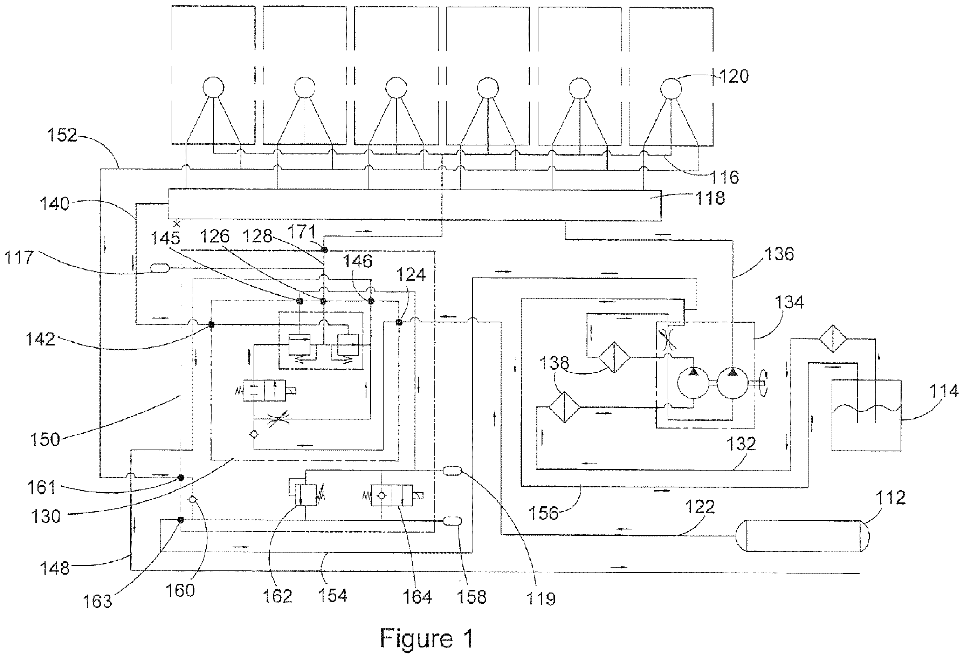

The embodiments disclosed herein are described, by way of example, in relation to a gaseous fuelled internal combustion engine illustrated in Figure 1 which is fueled with a gaseous fuel (first fuel) as the main fuel and a liquid fuel (second fuel) as a pilot fuel, but the present disclosure will be understood to apply more generally, to other engines fueled with two fuels when it is important to maintain a pressure bias to prevent one fuel from leaking into another fuel.

The engine shown in Figure 1 is a six cylinder engine but the disclosed modules can be employed with engines with any number of cylinders. Figure 1 is a schematic diagram that shows how the two fuels are directed from the respective fuel supplies, through the pressure control modules and to fuel injectors 120 for injection into the respective combustion chambers.

The first fuel is supplied from first fuel supply 112 through supply line 122 to inlet 124 of module 130 for controlling the first fuel rail pressure, and from the outlet 126 of module 130 first fuel flows through supply line 128 to first fuel rail 116. Second fuel is supplied from second fuel supply 114 through supply line 132 to pump assembly 134 and from pump assembly 134 second fuel flows through supply line 136 to second fuel rail 118. Second fuel is filtered through filters 138 which are fluidly connected to supply line 132.

Second fuel rail 118 is fluidly connected to module 130 through line 140 which connects to reference fuel inlet 142 of module 130. Through this fluid connection the second fuel can flow into module 130 to provide the reference pressure for controlling the pressure of the first fuel such that a pressure bias is maintained between the two fuel pressures. Module 130 also has a vent outlet 146 fluidly connected to vent line 148 which can be connected to the atmosphere as illustrated in Figure 1 or it can be connected to a system for capturing the vent gases. The second fuel flows out of module 130 through outlet 145.

As illustrated in Figure 1 second fuel control module 150 comprises a second fuel drain check valve 160 which is fluidly connected to line 152 which collects the second fuel drained from injectors 120 and a pressure relief valve 162 which is fluidly connected through the fluid passages in module 130 and through line 140 to second fuel rail 118. Pressure relief valve 162 opens if the pressure in second fuel rail 118 increases over a predetermined threshold. Second fuel control module 150 can also comprise a second fuel return valve 164 which is connected in parallel to pressure relief valve 162 and which can be commanded to allow the gradual release of fuel from second fuel rail 118 and line 140 at shut-down. Second fuel control module 150 generally also comprises second fuel rail pressure sensor 119 which measures the pressure in second fuel rail 118 and second fuel return pressure sensor 158 which measures the pressure in drain line 154.

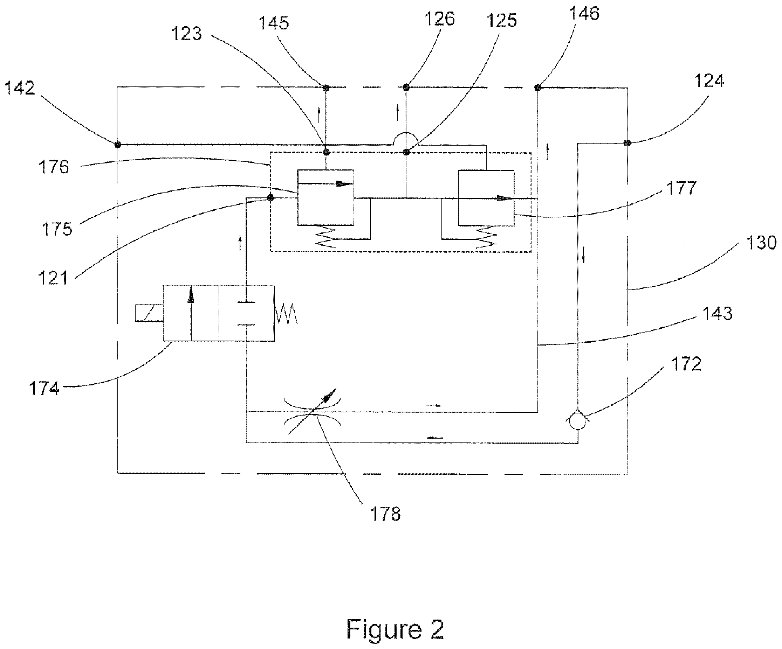

The components of module 130 for controlling the first fuel rail pressure are better illustrated in Figure 2. The first fuel is supplied to module 130 through inlet 124 and is directed through check valve 172 and shut-off valve 174 to pressure regulator 176. Pressure regulator 176 receives the first fuel through a first inlet 121 and the second fuel through a second inlet 123 and delivers the first fuel at a predetermined pressure bias compared to a second fuel rail pressure through outlet 125. Pressure regulator 176 comprises a pressure regulator valve 175 and a vent valve 177. Pressure regulator 176 regulates the pressure of first fuel to a predetermined value to maintain a predetermined pressure bias with the second fuel rail pressure. The construction and the operation of such a pressure regulator are known to a person skilled in the art and are therefore not described here. Module 130 further comprises a service valve 178 for venting fuel from the module and from the first fuel supply system when the engine system is serviced. The second fuel is supplied to module 130 through reference fuel inlet 142 which is fluidly connected to pressure regulator 176.

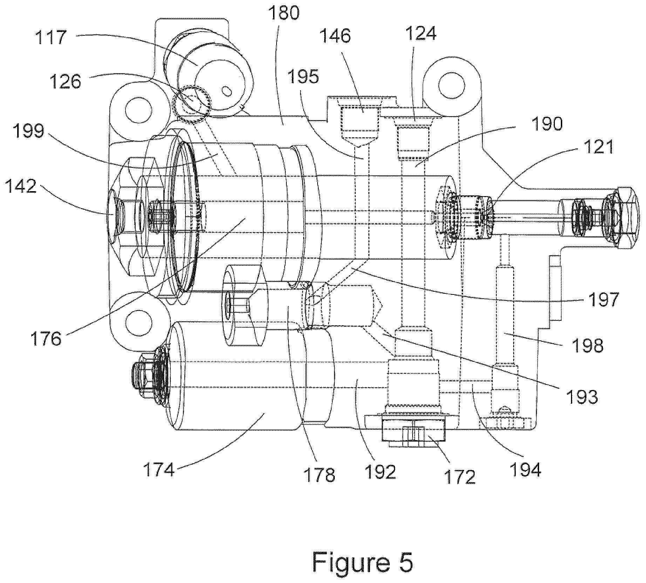

The first fuel exits module 130 through outlet 126 at a pressure that maintains a predetermined bias to the pressure of the second fuel. The second fuel exits pressure regulator valve 175 and flows out of module 130 through outlet 145. In some embodiments outlet 145 is not required if reference fuel inlet 142 is designed to serve both as inlet and outlet. That is, it is possible to design a system in which reference fuel inlet 142 is employed for both supplying second fuel to module 130 at a reference pressure and also as an outlet through which second fuel flows out of module 130, as shown in Figure 5 and further described below. The first fuel is vented out from module 130 through line 143 and vent outlet 146 when at least one of vent valve 177 and service valve 178 is open.

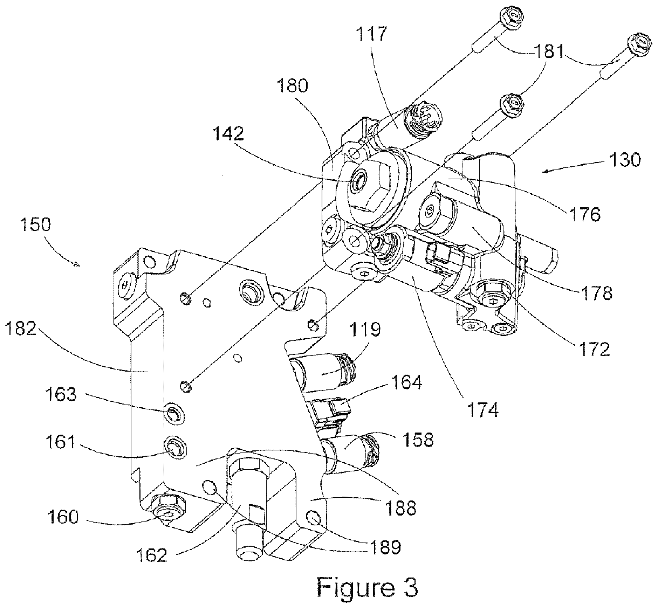

Module 130 for controlling a first fuel rail pressure and second fuel control module 150 are further illustrated in Figure 3 which shows a three-dimensional view of the two modules and their components. Module 130 comprises a manifold body 180 to which is mounted: pressure regulator 176, check valve 172, shut-off valve 174 and service valve 178, which are each fluidly connected to each other as illustrated in Figure 2, through internal passages which are shown in more detail in Figure 5. To provide a reference pressure, the second fuel is supplied to module 130 through reference fuel inlet 142 which is fluidly connected to pressure regulator 176. The second fuel can flow out of module 130 through the same orifice (namely, reference fuel inlet 142), so that no separate outlet is required.

In some embodiments, module 130 comprises fewer elements than illustrated in the present figures. For example, module 130 can comprise only pressure regulator 176, shut-off valve 174 and check valve 172. However, a benefit of disclosed module 130 is that it can be comprise more components to provide an overall arrangement that is more compact, and to further reduce piping and the number of associated connections and potential leak points. For example, module 130 preferably further comprises first fuel rail pressure sensor 117 which is also mounted on manifold body 180. Similarly, if there is sufficient space available on the engine, module 130 can be mated to second fuel control module 150 to further reduce the amount of piping, the potential leak points, and the total volume of high pressure fuel in the fuel delivery system. When there is not enough space to mount module 130 mated to second fuel control module 150, the two modules can be mounted separately. While this is less preferred because it increases the amount of piping and the volume occupied by high pressure fuel, mounting module 130 and second fuel control module 150 separately still provide benefits associated with higher volume manufacturing, and by integrating all of the components and using internal fluid passages within each of the modules.

In a preferred embodiment, second fuel control module 150 comprises manifold body 182 to which is mounted pressure relief valve 162, second fuel return valve 164, second fuel return pressure sensor 158, second fuel rail pressure sensor 119 and second fuel drain check valve 160. In other embodiments second fuel control module comprises fewer components. For example second fuel control module can comprise pressure relief valve 162 and at least one of the second fuel drain check valve 160, second fuel return valve 164, second fuel return pressure sensor 158 and second fuel rail pressure sensor 119.

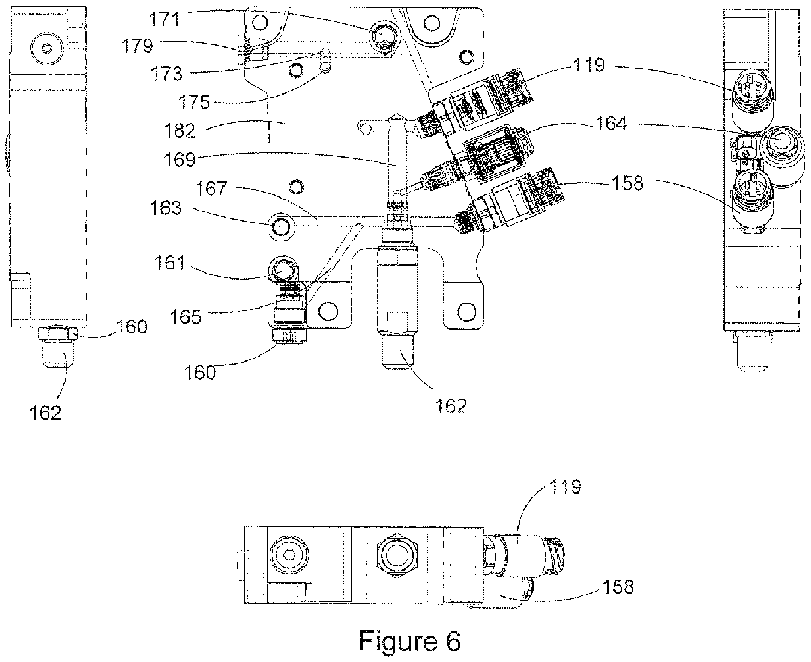

In the illustrated preferred embodiment, internal passages in manifold body 182 fluidly connect the components of second fuel control module 150 to each other, to module 130, to second fuel drain inlet 161, and to second fuel drain outlet 163. These internal passages within manifold body 182 are shown in Figure 6. In preferred embodiments, manifold body 182 supports additional components of the fuel supply system. For example, manifold body 182 is shaped to accommodate the mounting of pressure relief valve 162. Depending upon the location where manifold body 182 is mounted on the engine, it can further comprise features that reduce the number of structural elements. The illustrated example is designed to be installed near where a filter is mounted to the engine. Normally a spacer is required to provide a mounting point for the filter spaced apart from the engine block. Manifold body 182 is designed with a portion of the body that can be employed as an integral spacer 188 so that a separate spacer piece is not required, providing a simpler arrangement with less pieces. Mounting holes 189 are provided through manifold body 182 for mounting filters 138 (shown schematically in Figure 1). Manifold body 182 and the described internal passages provide an advantage over previous arrangements by providing a more compact arrangement, reducing the complexity of the fluid connections between different components of the fuel supply system, and reducing the number of potential leak points.

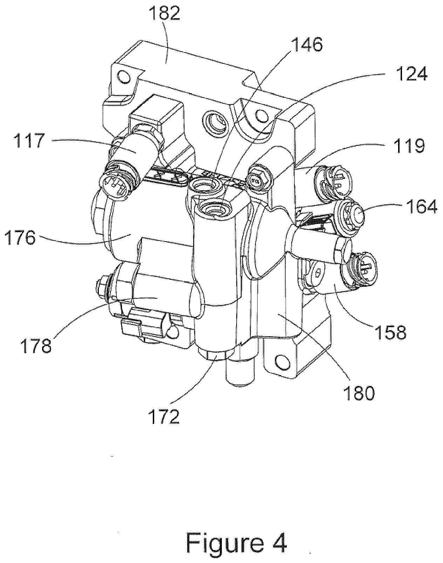

As illustrated in Figures 3 and 4 in preferred embodiments, the same advantages achieved by the arrangement of each module can be further achieved by joining module 130 directly to manifold body 182 of second fuel control module 150 to form a fluid tight seal there between with the internal passages of module 130 in communication with the internal passages of module 150 as shown schematically in Figure 1. Mounting hardware 181, such as bolts, clamps, or other fastening means can be used to join the two modules together as shown in Figure 4.

Figure 5 shows the internal passages within manifold body 180 of module 130. As illustrated in Figure 5, check valve 172 is fluidly connected to inlet 124 through passage 190. Check valve 172 is also fluidly connected to shut-off valve 174 through passage 192 and to service valve 178 through passage 193. The first fuel flows to pressure regulator 176 from inlet 124 by flowing through passage 190, then check valve 172, then passages 194 and 198, and then to first inlet 121. The second fuel flows to pressure regulator 176 through reference fuel inlet 142. Vent outlet 146 is also fluidly connected to pressure regulator 176 through passage 195 and to service valve 178 through passages 195 and 197. The first fuel exits module 130 through outlet 126 having a pressure that is controlled by pressure regulator 176. Outlet 126 is fluidly connected to the outlet of pressure regulator 176 through passage 199.

Figure 6 illustrates orthographic views of second fuel control module 150, namely the front view, the left and right side views and the top view. The front view shows in dashed lines the internal passages within manifold body 182 that fluidly connect the different components that are installed in manifold body 182. As illustrated in Figure 6 check valve 160 is fluidly connected to second fuel drain inlet 161 and further through passages 165, 167 and 169 to second fuel rail pressure sensor 119, second fuel return valve 164, second fuel return pressure sensor 158 and pressure relief valve 162. Check valve 160 is also fluidly connected through passage 167 to second fuel drain outlet 163. Piping to first fuel rail 116 (shown in Figure 1) is connected to port 171, which is fluidly connected to the internal passages of module 130 by passage 173 and port 175, which is fluidly connected to outlet 126 of module 130. Passage 173 can be formed by drilling from the left side as shown in the front view of Figure 6, and then plugged with plug 179.

In Figures 5 and 6, to better illustrate the internal passages and how they are fluidly connected, the passages are not drawn to scale, are partly schematic, and certain physical details not necessary for the understanding of this arrangement are not shown. For example, Figure 5 does not show the details on how the outlet of pressure regulator 176 is fluidly connected to outlet 126 or the details on how vent outlet 146 is fluidly connected to pressure regulator 176.

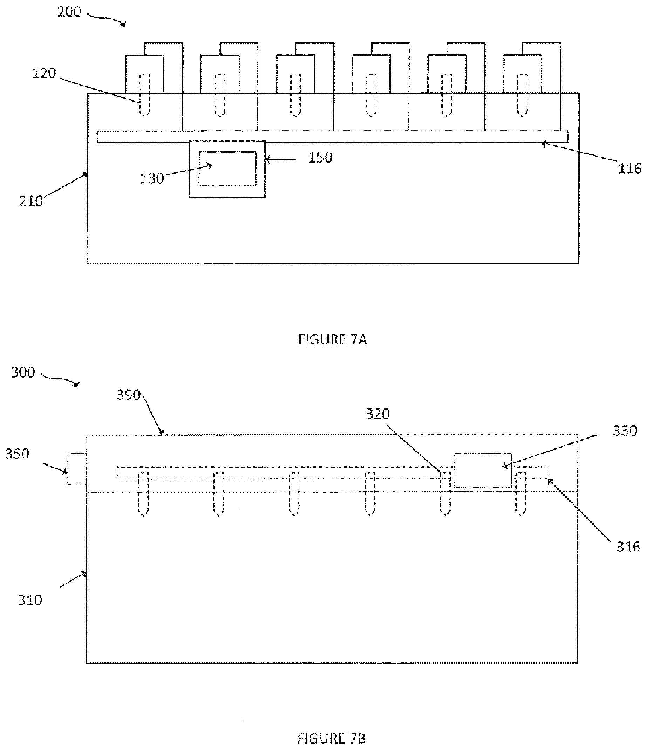

As described above and illustrated in Figures 3 and 4, module 130 for controlling the pressure of the first fuel can be mounted on manifold body 182 of second fuel control module 150. This is the preferred arrangement when there is sufficient space available to mount this combined assembly of modules 130 and 150. This arrangement is illustrated in Figure 7A which represents an engine 200 comprising six cylinders, each provided with a respective injector 120 and an engine block 210. In the embodiment illustrated in Figure 7A first fuel rail 116 is an external fuel rail, which is mounted on the engine block. Module 130 is mounted on second fuel control module 150 as schematically represented here and the assembly of the two modules is mounted on engine block 210. This is a simplified schematic view that only shows the components necessary for understanding this embodiment. However, those familiar with engines will understand that there are many more other components mounted to an engine block, such as fuel pumps, oil filters, engine control units, water/coolant pumps and associated hoses for circulating the engine coolant.

The disclosed modules can be mounted in other locations one the engine assembly such as to the cylinder head or at other locations in the engine bay of the vehicle in which the engine is mounted, for example, to the vehicle frame. In these embodiments, modules 130 and 150 are preferably located close to the fuel injectors to reduce the amount of piping between the modules and the fuel rails, and at a location that also reduces the piping between the modules and the fuel supply system.

Another advantage of the disclosed modular arrangement is that if an engine does not have sufficient space to mount a combined assembly of modules 130 and 150, these modules can be mounted separately. With reference to Figure 7B, engine 300 has an engine block 310, a cylinder head 390 and an internal first fuel rail 316 which is provided within cylinder head 390. Injectors 320 are fluidly connected to first fuel rail 316. In this embodiment, module 330 functions as module 130 described in other embodiments, controlling the pressure of the first fuel and it is mounted on cylinder head 390 where space is available, and second fuel control module 350, which functions in the same way as module 150 as described with respect to other embodiments, is mounted on cylinder head 390 but at a different location, where space is available. Modules 330 and 350 are fluidly connected through piping to function in the same way as in other embodiments with the only difference being that these two modules are not joined together. The location of modules 330 and 350 in Figure 7B is to illustrate by way of example that these modules can be mounted in different locations, but it will be understood that they could be mounted in other locations, depending upon the design of a particular engine and where there is space available.

There can be a long development period for the design of engine components. Beyond the time needed for the design, the development process also includes time for validation and testing. Durability testing can simulate thousands of hours of operation in the field. An advantage of the disclosed modular fuel pressure control assembly is that the same basic design can be used for many different engine types, even if there are constraints on the available space. If there is sufficient space then a preferred embodiment is the combined assembly for both modules 130 and 150. If sufficient space is not available, then the modules can be mounted in different locations but the same design can be used. Features like an spacer can be incorporated into the manifold body to facilitate installation on certain engines without changing the basic design of the modules.

## Claims

1. A module (130) for controlling a first fuel rail (116) pressure in an internal combustion engine and maintaining a predetermined pressure bias with a second fuel rail (118) pressure, both first and second fuels being directly injected into a combustion chamber, said module comprising:
a manifold body (180) comprising an inlet (124) into said manifold body (180) for receiving said first fuel into internal fuel passages defined by said manifold body (180), and an outlet (126) from said manifold body (180) for delivering said first fuel to a first fuel rail (116);
a pressure regulator (176) for controlling the rail pressure of said first fuel as a function of said second fuel rail pressure which is used as a reference pressure for maintaining said pressure bias, said pressure regulator (176) comprising:
a first inlet for receiving said first fuel which is fluidly connected through a first passage (190) provided in said manifold body (180) to said inlet (124) of said manifold body;
a second inlet (142) for receiving said second fuel; and
an outlet for delivering said first fuel with said predetermined pressure bias, said outlet (126) being fluidly connected through a second passage (199) provided in said manifold body to said outlet (126) of said manifold body;
a check valve (172) having an inlet fluidly connected through said first passage (190) to said inlet (124) of said manifold body and to said pressure regulator (176); and
a shut-off valve (174) for shutting down fluid flow to said first fuel rail (116), having an inlet fluidly connected through said first passage (190) to said inlet (124) of said manifold body;
wherein said pressure regulator (176), said check valve (172) and said shut-off valve (174) are components installed on said manifold body (180) to form a unitary and independent structure which allows fluid communication between said components through internal passages in said manifold body (180) while allowing flexibility of moving said components together as one structural unit.

2. The module of claim 1 further comprising a vent outlet (146) for venting said first fuel from said module, said vent outlet (146) being fluidly connected to said pressure regulator (176) through a third passage (195) provided in said manifold body.

3. The module of claim 2 further comprising a service valve (178) for venting fuel from said module during servicing, said service valve (178) being installed on said manifold body and being fluidly connected through said third passage (195) to said vent outlet (146).

4. The module of claim 1 further comprising a pressure sensor (117) for measuring the pressure in said first fuel rail (116), said pressure sensor (117) being installed on said manifold body and being connected through an internal passage to said outlet (126) of said manifold body.

5. An assembly of the module of any of claims 1-4 and a manifold body (182) of a second fuel control module (150) for controlling said second fuel rail (118) pressure, the manifold body (180) for controlling first fuel rail (116) pressure being installed on the manifold body (182) of the second fuel control module (150).

6. The assembly of claim 5 wherein said manifold body (182) of said second fuel control module (150) has a second fuel drain inlet (161), a second fuel drain outlet (163), a port (175) for fluidly connecting second fuel control module (150) to said module for controlling said first fuel rail (116) pressure and a port (171) for fluidly connecting said manifold body of said second fuel control module (150) to a first fuel rail (116).

7. The assembly of claim 6 wherein said second fuel control module (150) further comprises a second fuel pressure relief valve (162) which is mounted on said manifold body (182) of said second fuel control module (150) and which is fluidly connected through passages in said manifold body (182) of said second fuel control module (150) to said second fuel drain inlet (161) and to said second fuel drain outlet (163).

8. The assembly of claim 7 wherein said second fuel control module (150) further comprises at least one of a second fuel return valve (164), a second fuel return pressure sensor (158), a second fuel rail pressure sensor (119) and a second fuel drain check valve (160) which can be mounted on said body of said second fuel control module (150) and are fluidly connected through passages in said manifold body (182) of said second fuel control module (150) to said second fuel drain inlet (161) and to said second fuel drain outlet (163).

9. The assembly of claim 5 wherein said manifold body (182) of said second fuel control module (150) has at least one prolonged end which accommodates the mounting of a system component.

10. The assembly of claim 9 wherein said system component is a filter (138) for said second fuel.

11. The assembly of claim 5 wherein said module (130) for controlling said first fuel rail (116) pressure and said second fuel control module (150) is mounted on an engine block (210), on a cylinder head (390) of said engine or on a frame of a vehicle which is powered by said engine.

12. The module of any of claims 1-4 wherein said manifold body (180) of said module (130) for controlling first fuel rail (116) pressure is mounted on a cylinder head (390) of said engine, on an engine block (210) or on a frame of a vehicle that is powered by said engine and is fluidly connected to a second fuel control module (150) that is mounted on said cylinder head (390), on said engine block (210) or on said frame separately from said module (130) for controlling said first fuel rail (116) pressure.

13. A method of installing the module of any of claims 1-4 comprising:
a. placing said manifold body (180) of said module (130) for controlling first fuel rail (116) pressure on a manifold body (182) of a second fuel control module (150) and mounting it thereto;
b. placing said manifold body (182) of said second fuel control module (150) on an engine block (210), on a cylinder head (390) of said engine or on a frame of a vehicle powered by said engine and
c. fluidly connecting said manifold body (180) of said module for controlling first fuel rail (116) pressure to a first fuel supply and a first fuel rail (116).

14. A method of installing the module of any of claims 1-4 comprising:
a. placing said manifold body (180) of said module (130) for controlling first fuel rail (116) pressure on a cylinder head (390), on an engine block (210) or on a frame of a vehicle powered by said engine and mounting it thereto; and
b. fluidly connecting said manifold body (180) of said module (130) for controlling first fuel rail (116) pressure with components of a second fuel control module (150) which is mounted on said cylinder head (390), to a first fuel supply and to a first fuel rail (116).

## Patentansprüche

1. Modul (130) zur Regelung eines Drucks einer Verteilerleitung (116) eines ersten Kraftstoffs in einer Brennkraftmaschine und Erhalten einer vorbestimmten Druckvorspannung mit einem Druck einer Verteilerleitung (118) eines zweiten Kraftstoffs, wobei sowohl der erste als auch der zweite Kraftstoff direkt in eine Brennkammer eingespritzt werden, wobei das Modul Folgendes umfasst:
einen Verteilerkörper (180), der einen Einlass (124) in den Verteilerkörper (180) zur Aufnahme des ersten Kraftstoffs in interne Kraftstoffdurchgänge, die durch den Verteilerkörper (180) definiert sind, und einen Auslass (126) aus dem Verteilerkörper (180) zum Liefern des ersten Kraftstoffs an eine Verteilerleitung (116) des ersten Kraftstoffs umfasst;
einen Druckregler (176) zum Regeln des Drucks der Verteilerleitung des ersten Kraftstoffs als eine Funktion des Drucks der Verteilerleitung des zweiten Kraftstoffs, der als ein Referenzdruck zum Erhalten der Druckvorspannung verwendet wird, wobei der Druckregler (176) Folgendes umfasst:
einen ersten Einlass zur Aufnahme des ersten Kraftstoffs, der durch einen ersten Durchgang (190), der in dem Verteilerkörper (180) bereitgestellt ist, fluidisch mit dem Einlass (124) des Verteilerkörpers verbunden ist;
einen zweiten Einlass (142) zur Aufnahme des zweiten Kraftstoffs; und
einen Auslass zum Liefern des ersten Kraftstoffs mit der vorbestimmten Druckvorspannung, wobei der Auslass (126) durch einen zweiten Durchgang (199), der in dem Verteilerkörper bereitgestellt ist, fluidisch mit dem Auslass (126) des Verteilerkörpers verbunden ist;
ein Rückschlagventil (172), das einen Einlass aufweist, der durch den ersten Durchgang (190) fluidisch mit dem Einlass (124) des Verteilerkörpers und dem Druckregler (176) verbunden ist; und
ein Absperrventil (174) zum Sperren einer Fluidströmung an die Verteilerleitung (116) des ersten Kraftstoffs, das einen Einlass aufweist, der durch den ersten Durchgang (190) fluidisch mit dem Einlass (124) des Verteilerkörpers verbunden ist;
wobei der Druckregler (176), das Rückschlagventil (172) und das Absperrventil (174) Bauteile sind, die an dem Verteilerkörper (180) installiert sind, um eine einheitliche und unabhängige Struktur zu bilden, die eine Fluidkommunikation zwischen den Bauteilen durch interne Durchgänge in dem Verteilerkörper (180) ermöglicht, während sie eine Flexibilität des gemeinsamen Bewegens dieser Bauteile als eine Struktureinheit ermöglicht.

2. Modul nach Anspruch 1, ferner umfassend einen Ablassauslass (146) zum Ablassen des ersten Kraftstoffs aus dem Modul, wobei der Ablassauslass (146) durch einen dritten Durchgang (195), der in dem Verteilerkörper bereitgestellt ist, fluidisch mit dem Druckregler (176) verbunden ist.

3. Modul nach Anspruch 2, ferner umfassend ein Wartungsventil (178) zum Ablassen von Kraftstoff aus dem Modul während einer Wartung, wobei das Wartungsventil (178) an dem Verteilerkörper installiert ist und durch den dritten Durchgang (195) fluidisch mit dem Ablassauslass (146) verbunden ist.

4. Modul nach Anspruch 1, ferner umfassend einen Drucksensor (117) zum Messen des Drucks in der Verteilerleitung (116) des ersten Kraftstoffs, wobei der Drucksensor (117) an dem Verteilerkörper installiert ist und durch einen internen Durchgang mit dem Auslass (126) des Verteilerkörpers verbunden ist.

5. Anordnung des Moduls nach einem der Ansprüche 1-4 und Verteilerkörper (182) eines Regelungsmoduls (150) des zweiten Kraftstoffs zum Regeln des Drucks der Verteilerleitung (118) des zweiten Kraftstoffs, wobei der Verteilerkörper (180) zum Regeln des Druck der Verteilerleitung (116) des ersten Kraftstoffs an dem Verteilerkörper (182) des Regelungsmoduls (150) des zweiten Kraftstoffs installiert ist.

6. Anordnung nach Anspruch 5, wobei der Verteilerkörper (182) des Regelungsmoduls (150) des zweiten Kraftstoffs einen Abflusseinlass (161) des zweiten Kraftstoffs, einen Abflussauslass (163) des zweiten Kraftstoffs, einen Anschluss (175) zum fluidischen Verbinden des Regelungsmoduls (150) des zweiten Kraftstoffs an das Modul zur Regelung des Drucks der Verteilerleitung (116) des ersten Kraftstoffs und einen Anschluss (171) zum fluidischen Verbinden des Verteilerkörpers des Regelungsmoduls (150) des zweiten Kraftstoffs mit einer Verteilerleitung (116) des ersten Kraftstoffs aufweist.

7. Anordnung nach Anspruch 6, wobei das Regelungsmodul (150) des zweiten Kraftstoffs ferner ein Überdruckventil (162) des Drucks des zweiten Kraftstoffs umfasst, das an dem Verteilerkörper (182) des Regelungsmoduls (150) des zweiten Kraftstoffs befestigt ist, und das durch Durchgänge in dem Verteilerkörper (182) des Regelungsmoduls (150) des zweiten Kraftstoffs fluidisch mit dem Abflusseinlass (161) des zweiten Kraftstoffs und dem Abflussauslass (163) des zweiten Kraftstoffs verbunden ist.

8. Anordnung nach Anspruch 7, wobei das Regelungsmodul (150) des zweiten Kraftstoffs ferner mindestens ein Rücklaufventil (164) des zweiten Kraftstoffs, einen Rücklaufdrucksensor (158) des zweiten Kraftstoffs, einen Drucksensor (119) der Verteilerleitung des zweiten Kraftstoffs und ein Abflussrückschlagventil (160) des zweiten Kraftstoffs umfasst, die an dem Körper des Regelungsmoduls (150) des zweiten Kraftstoffs befestigt werden können und durch Durchgänge in dem Verteilerkörper (182) des Regelungsmoduls (150) des zweiten Kraftstoffs fluidisch mit dem Abflusseinlass (161) des zweiten Kraftstoffs und dem Abflussauslass (163) des zweiten Kraftstoffs verbunden sind.

9. Anordnung nach Anspruch 5, wobei der Verteilerkörper (182) des Regelungsmoduls (150) des zweiten Kraftstoffs mindestens ein verlängertes Ende aufweist, das die Befestigung eines Systembauteils beherbergt.

10. Anordnung nach Anspruch 9, wobei das Systembauteil ein Filter (138) für den zweiten Kraftstoff ist.

11. Anordnung nach Anspruch 5, wobei das Modul (130) zur Regelung des Drucks der Verteilerleitung (116) des ersten Kraftstoffs und das Regelungsmodul (150) des zweiten Kraftstoffs an einem Kraftmaschinenblock (210), einem Zylinderkopf (390) der Kraftmaschine oder an einem Rahmen eines Fahrzeugs, das durch die Kraftmaschine angetrieben wird, befestigt ist.

12. Modul nach einem der Ansprüche 1-4, wobei der Verteilerkörper (180) des Moduls (130) zur Regelung des Drucks der Verteilerleitung (116) des ersten Kraftstoffs an einem Zylinderkopf (390) der Kraftmaschine, an einem Kraftmaschinenblock (210) oder an einem Rahmen des Fahrzeugs, das durch die Kraftmaschine angetrieben wird, befestigt ist und fluidisch mit einem Regelungsmodul (150) des zweiten Kraftstoffs verbunden ist, das an dem Zylinderkopf (390), an dem Kraftmaschinenblock (210) oder an dem Rahmen getrennt von dem Modul (130) zur Regelung des Drucks der Verteilerleitung (116) des ersten Kraftstoffs befestigt ist.

13. Verfahren zum Installieren des Moduls nach einem der Ansprüche 1-4, das Folgende umfasst:
a. Positionieren des Verteilerkörpers (180) des Moduls (130) zur Regelung des Drucks der Verteilerleitung (116) des ersten Kraftstoffs an einem Verteilerkörper (182) eines Regelungsmoduls (150) des zweiten Kraftstoffs und Befestigen dessen daran;
b. Positionieren des Verteilerkörpers (182) des Regelungsmoduls (150) des zweiten Kraftstoffs an einem Kraftmaschinenblock (210), an einem Zylinderblock (390) der Kraftmaschine oder an einem Rahmen eines Fahrzeugs, das durch die Kraftmaschine angetrieben wird, und
c. fluidisches Verbinden des Verteilerkörpers (180) des Moduls zur Regelung des Drucks der Verteilerleitung (116) des ersten Kraftstoffs mit einer Zufuhr des ersten Kraftstoffs und einer Verteilerleitung (116) des ersten Kraftstoffs.

14. Verfahren zum Installieren des Moduls nach einem der Ansprüche 1-4, das Folgende umfassend:
a. Positionieren des Verteilerkörpers (180) des Moduls (130) zur Regelung von Druck der Verteilerleitung (116) des ersten Kraftstoffs an einem Zylinderkopf (390), an einem Kraftmaschinenblock (210) oder an einem Rahmen eines Fahrzeugs, das durch die Kraftmaschine angetrieben wird, und Befestigen dessen daran; und
b. fluidisches Verbinden des Verteilerkörpers (180) des Moduls (130) zur Regelung von Druck der Verteilerleitung (116) des ersten Kraftstoffs mit Bauteilen eines Regelungsmoduls (150) des zweiten Kraftstoffs, das an dem Zylinderkopf (390) befestigt ist, mit einer Zufuhr des ersten Kraftstoffs und mit einer Verteilerleitung (116) des ersten Kraftstoffs.

## Revendications

1. Module (130) permettant de contrôler la pression d'un premier rail de carburant (116) dans un moteur à combustion interne et de maintenir une sollicitation de pression prédéterminée avec la pression d'un second rail de carburant (118), le premier et le second carburants étant tous deux directement injectés dans une chambre de combustion, ledit module comprenant :
un corps de collecteur (180) comprenant une entrée (124) dans ledit corps de collecteur (180) pour recevoir ledit premier carburant dans des passages de carburant internes définis par ledit corps de collecteur (180), et une sortie (126) dudit corps de collecteur (180) pour délivrer ledit premier carburant sur un premier rail de carburant (116) ;
un régulateur de pression (176) permettant de contrôler la pression de rail dudit premier carburant en fonction de la pression dudit second rail de carburant qui est utilisée comme pression de référence pour maintenir ladite sollicitation de pression, ledit régulateur de pression (176) comprenant :
une première entrée pour recevoir ledit premier carburant qui est reliée fluidiquement par un premier passage (190) prévu dans ledit corps de collecteur (180) à ladite entrée (124) dudit corps de collecteur ;
une seconde entrée (142) pour recevoir ledit second carburant ; et
une sortie pour délivrer ledit premier carburant avec ladite sollicitation de pression prédéterminée, ladite sortie (126) étant reliée fluidiquement par un deuxième passage (199) prévu dans ledit corps de collecteur à ladite sortie (126) dudit corps de collecteur ;
une soupape anti-retour (172) ayant une entrée reliée fluidiquement par ledit premier passage (190) à ladite entrée (124) dudit corps de collecteur et audit régulateur de pression (176) ; et
une soupape d'arrêt (174) pour couper l'écoulement de fluide vers ledit premier rail de carburant (116), ayant une entrée reliée fluidiquement par ledit premier passage (190) à ladite entrée (124) dudit corps de collecteur ;
dans lequel ledit régulateur de pression (176), ladite soupape anti-retour (172) et ladite soupape d'arrêt (174) sont des composants installés sur ledit corps de collecteur (180) pour former une structure unitaire et indépendante qui permet la communication fluidique entre lesdits composants par des passages internes dans ledit corps de collecteur (180) tout en permettant la flexibilité de déplacer lesdits composants ensemble en une seule unité structurelle.

2. Module selon la revendication 1, comprenant en outre une sortie d'évent (146) pour évacuer ledit premier carburant dudit module, ladite sortie d'évent (146) étant reliée fluidiquement audit régulateur de pression (176) par un troisième passage (195) prévu dans ledit corps de collecteur.

3. Module selon la revendication 2, comprenant en outre une soupape de service (178) pour évacuer le carburant dudit module pendant l'entretien, ladite soupape de service (178) étant installée sur ledit corps de collecteur et étant reliée fluidiquement par ledit troisième passage (195) à ladite sortie d'évent (146).

4. Module selon la revendication 1, comprenant en outre un capteur de pression (117) pour mesurer la pression dans ledit premier rail de carburant (116), ledit capteur de pression (117) étant installé sur ledit corps de collecteur et étant relié par un passage interne à ladite sortie (126) dudit corps de collecteur.

5. Ensemble du module selon l'une quelconque des revendications 1 à 4 et d'un corps de collecteur (182) d'un second module de contrôle de carburant (150) permettant de contrôler la pression dudit second rail de carburant (118), le corps de collecteur (180) permettant de contrôler la pression du premier rail de carburant (116) étant installé sur le corps de collecteur (182) du second module de contrôle de carburant (150) .

6. Ensemble selon la revendication 5, dans lequel ledit corps de collecteur (182) dudit second module de contrôle de carburant (150) présente une seconde entrée d'évacuation de carburant (161), une seconde sortie d'évacuation de carburant (163), un orifice (175) pour relier fluidiquement le second module de contrôle de carburant (150) audit module permettant de contrôler la pression dudit premier rail de carburant (116) et un orifice (171) pour relier fluidiquement ledit corps de collecteur dudit second module de contrôle de carburant (150) à un premier rail de carburant (116).

7. Ensemble selon la revendication 6, dans lequel ledit second module de contrôle de carburant (150) comprend en outre une seconde soupape de décharge de pression de carburant (162) qui est montée sur ledit corps de collecteur (182) dudit second module de contrôle de carburant (150) et qui est reliée fluidiquement par des passages dans ledit corps de collecteur (182) dudit second module de contrôle de carburant (150) à ladite seconde entrée d'évacuation de carburant (161) et à ladite seconde sortie d'évacuation de carburant (163).

8. Ensemble selon la revendication 7, dans lequel ledit second module de contrôle de carburant (150) comprend en outre au moins l'un parmi une seconde soupape de retour de carburant (164), un second capteur de pression de retour de carburant (158), un second capteur de pression de rail de carburant (119) et une seconde soupape anti-retour d'évacuation de carburant (160) qui peuvent être montés sur ledit corps dudit second module de contrôle de carburant (150) et sont reliés fluidiquement par des passages dans ledit corps de collecteur (182) dudit second module de contrôle de carburant (150) à ladite seconde entrée d'évacuation de carburant (161) et à ladite seconde sortie d'évacuation de carburant (163).

9. Ensemble selon la revendication 5, dans lequel ledit corps de collecteur (182) dudit second module de contrôle de carburant (150) présente au moins une extrémité prolongée qui accueille le montage d'un composant de système.

10. Ensemble selon la revendication 9, dans lequel ledit composant de système est un filtre (138) pour ledit second carburant.

11. Ensemble selon la revendication 5, dans lequel ledit module (130) permettant de contrôler la pression dudit premier rail de carburant (116) et ledit second module de contrôle de carburant (150) sont montés sur un bloc moteur (210), sur une culasse (390) dudit moteur ou sur un châssis d'un véhicule qui est alimenté par ledit moteur.

12. Module selon l'une quelconque des revendications 1 à 4, dans lequel ledit corps de collecteur (180) dudit module (130) permettant de contrôler la pression du premier rail de carburant (116) est monté sur une culasse (390) dudit moteur, sur un bloc moteur (210) ou sur un châssis d'un véhicule qui est alimenté par ledit moteur et est relié fluidiquement à un second module de contrôle de carburant (150) qui est monté sur ladite culasse (390), sur ledit bloc moteur (210) ou sur ledit châssis séparément dudit module (130) permettant de contrôler la pression dudit premier rail de carburant (116).

13. Procédé d'installation du module selon l'une quelconque des revendications 1 à 4, comprenant :
a. le placement dudit corps de collecteur (180) dudit module (130) permettant de contrôler la pression du premier rail de carburant (116) sur un corps de collecteur (182) d'un second module de contrôle de carburant (150) et son montage sur celui-ci ;
b. le placement dudit corps de collecteur (182) dudit second module de contrôle de carburant (150) sur un bloc moteur (210), sur une culasse (390) dudit moteur ou sur un châssis d'un véhicule alimenté par ledit moteur et
c. la liaison fluidique dudit corps de collecteur (180) dudit module permettant de contrôler la pression du premier rail de carburant (116) à une première alimentation en carburant et à un premier rail de carburant (116).

14. Procédé d'installation du module selon l'une quelconque des revendications 1 à 4, comprenant :
a. le placement dudit corps de collecteur (180) dudit module (130) permettant de contrôler la pression du premier rail de carburant (116) sur une culasse (390), sur un bloc moteur (210) ou sur un châssis d'un véhicule alimenté par ledit moteur et son montage sur celui-ci ; et
b. la liaison fluidique dudit corps de collecteur (180) dudit module (130) permettant de contrôler la pression du premier rail de carburant (116) avec des composants d'un second module de contrôle de carburant (150) qui est monté sur ladite culasse (390), à une première alimentation en carburant et à un premier rail de carburant (116).
